# EUROPÄISCHE PATENTSCHRIFT

(11) **EP 3 873 051 B1**
(45) Veröffentlichungstag und Bekanntmachung des Hinweises auf die Patenterteilung: **02.04.2025**
(21) Anmeldenummer: 20159467.8
(22) Anmeldetag: 26.02.2020
(51) Int. Cl.: H04L 9/40, G06F 21/44

(54) **VERFAHREN ZUR VALIDIERUNG EINES DIGITALEN ZERTIFIKATS**
METHOD FOR VALIDATION OF A DIGITAL CERTIFICATE
PROCÉDÉ DE VALIDATION D'UN CERTIFICAT NUMÉRIQUE

(43) Veröffentlichungstag der Anmeldung: 01.09.2021
(73) Patentinhaber: Siemens Aktiengesellschaft, 80333 München (DE)
(72) Erfinder: Fries, Steffen, 85598 Baldham (DE); Güttinger, Andreas, 90765 Fürth (DE)
(74) Vertreter: Siemens Patent Attorneys

(56) Entgegenhaltungen:
- CH-A2- 713 421
- US-A1- 2005 273 610

## Beschreibung

Die Erfindung betrifft ein Verfahren zur Validierung eines digitalen Zertifikats durch eine Validierungsvorrichtung, die stellvertretend für ein erstes Gerät das Zertifikat eines Kommunikationspartners überprüft, sowie eine Validierungsvorrichtung und eine Statussammelvorrichtung zur Durchführung des Verfahrens.

Geräte, beispielsweise in einer Automatisierungsanlage, kommunizieren über ein Datennetzwerk mit anderen Geräten bzw. Steuerungsplattformen. Solche miteinander kommunizierenden Geräte werden häufig als Internet der Dinge-Geräte bzw. abgekürzt als IoT-Geräte bezeichnet. IoT-Geräte benutzen zunehmend digitale Zertifikate, um sich gegenüber anderen Kommunikationspartnern oder auch gegenüber Diensten, die beispielsweise auf Applikationsservern bereitgestellt werden, zu authentisieren. Digitale Zertifikate, beispielsweise entsprechend dem ITU-T Standard X.509, werden von einer Ausstellungsstelle einer Schlüsselinfrastruktur ausgestellt und durch eine Signatur mit einem privaten Schlüssel der Ausstellungsstelle als gültig bestätigt werden.

Um ein solches Zertifikat zu validieren, **d.h.** seine Gültigkeit zu prüfen, sind mehrere Schritte durchzuführen. So muss die digitale Signatur des Zertifikats, die Laufzeit des Zertifikats, der Verwendungszweck und eine Übereinstimmung der Identität des Inhabers des Zertifikats überprüft werden. Es ist des Weiteren eine Überprüfung des Zertifikats gegenüber einer Widerrufsliste durchzuführen. Ebenfalls ist der Zertifikatspfad zu überprüfen, das heißt eine Überprüfung der Zertifikate entlang einer Zertifikatskette bis zu einem Wurzelzertifikat, auch Root-Zertifikat genannt, durchzuführen. Bei der Validierung werden die Signaturen aller Zertifikate in der Zertifikatskette sowie bestimmte Parameter im Zertifikat geprüft.

Diese verschiedenen Schritte sind speicher- und rechenintensiv und belasten insbesondere IoT-Geräte, die häufig einfach strukturiert und über geringe Rechen- und Speicherkapazität verfügen. Die Abarbeitung anderer Prozesse im Gerät werden dadurch verzögert. Darüber hinaus wird die Überprüfung von verschiedenen IoT-Geräten in derselben Weise durchgeführt, so dass das Ergebnis auch anderen zur Verfügung gestellt werden kann, um die Überprüfung selbst nur auf einer Komponente auszuführen.

CH713421A2 beschreibt ein Verfahren zum Verifizieren eines Zertifikats durch Verifizieren einer Signatur des Zertifikats in Antwort auf eine empfangene Anforderung für eine Verifizierung des Zertifikats, durch Vergleichen von Authentifizierungsinformation, die in einer Zertifikats-Ausstellungs-Anforderungs-Transaktion enthalten ist, mit Authentifizierungsinformation, die in dem Zertifikat enthalten ist, und durch Bestimmen, ob das Zertifikat widerrufen ist.

US2005/273610A1 offenbart eine Informationsverarbeitungsvorrichtung zum Verifizieren der Gültigkeit eines Zertifikats eines Kommunikationspartner. Dazu wird Information zum Identifizieren der Informationsverarbeitungsvorrichtung und ein Ergebnis des Verifizierens extern übertragen.

Es ist bekannt, die Prüfung eines einzelnen oder auch mehrerer Zertifikate an einen Validierungsdienst auf einem vom Gerät abgesetzten Server zu delegieren, der mit eine einzigen Antwortnachricht die komplette Zertifikatvalidierung dem Gerät bereitstellt. Dazu werden standardisierte Verfahren und insbesondere Signalisierungsprotokolle, wie beispielsweise das Online-Zertifikat-Status-Protokoll OCSP oder auch das Serverbasierte-Zertifikat-Validierungsprotokoll SCVP verwendet, die es ermöglichen, einen Status eines digitalen Zertifikats bei dem Validierungsdienst abzufragen bzw. die Zertifikatspfadkonstruktion inklusive der Validierung durchzuführen. In größeren Anlagennetzwerken, die in mehrere Teilnetzwerke untergliedert sind, ist häufig jeweils ein solcher Server für die Geräte in einem Teilnetzwerk zuständig.

Dabei ist es auch möglich, ein Ergebnis der Zertifikatsvalidierung für einen bestimmten Zeitraum in einem solchen Server zu speichern. Fordert ein Gerät die Validierung eines Zertifikates an, für das bereits ein Validierungsergebnis im Server vorliegt und erlaubt das Gerät die Verwendung eines gespeicherten Validierungsergebnisses, so überprüft der Server nicht mehr explizit das Zertifikat bzw. den Zertifikatspfad, sondern liefert das gespeicherte Zertifikatsergebnis an das anfragende Gerät zurück.

Solche zwischengespeicherten Ergebnisse von Zertifikatsvalidierungen sind jedoch lediglich für einen begrenzten Zeitraum und lediglich auf dem angefragten Server gespeichert. Die

Verwendung eines solchen Servers zur Zertifikatvalidierung reduziert zwar die Rechen- und Speicherkapazität des einzelnen IoT-Gerätes, es ergibt sich daraus aber eine signifikante Antwortzeit, bis das Validierungsergebnis im Gerät vorliegt sowie Rechenaufwand im Server. Sind in einer Anlage sehr viele IoT-Geräte untereinander oder auch mit einem Dienst bzw. Applikationsserver verbunden, werden häufig dieselben Zertifikate von unterschiedlichen Servern validiert.

Es ist daher die Aufgabe der vorliegenden Erfindung, das Ergebnis einer Validierung von Zertifikaten bzw. Zertifikatsketten zeitoptimiert und mit möglichst geringem Rechenaufwand für das gesamte Anlagennetzwerk bereitzustellen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum Validieren eines digitalen Zertifikats durch eine Validierungsvorrichtung, die stellvertretend für ein erstes Gerät das Zertifikat eines Kommunikationspartners überprüft, umfassend die Verfahrensschritte:
- Anfordern einer Validierung des Zertifikats des Kommunikationspartners durch das erste Gerät bei einer ersten Validierungsvorrichtung,
- Abfragen einer Validierungsinformation durch die erste Validierungsvorrichtung bei einer Statussammelvorrichtung,
- Überprüfen in der ersten Validierungsvorrichtung, ob eine Validierungsinformation von der Sammelvorrichtung empfangen wurde, und
- Senden der Validierungsinformation von der ersten Validierungsvorrichtung an das erste Gerät, wobei
lediglich bei einem negativen Prüfergebnis die Validierungsinformation des Zertifikats in der ersten Prüfungsvorrichtung ermittelt wird.

Kommunikationspartner des Gerätes sind beispielsweise andere Geräte, die in einem gleichen oder verschiedenen Teilnetzwerkbereich eines Anlagennetzes angeordnet sind. Kommunikationspartner des Gerätes sind aber auch Geräte, Server oder sonstige Vorrichtungen, die außerhalb des Anlagennetzes angeordnet und über ein Kommunikationsnetzwerk, beispielsweise dem Internet, mit dem Gerät verbunden sind. Mit Validierung wird dabei die Überprüfung der Gültigkeit und mit Validierungsinformation ist ein Ergebnis der Validierung eines Zertifikats bezeichnet. Die angeforderte Validierung des Zertifikats kann mehrere Prüfaspekte, wie beispielsweise die Überprüfung der Integrität des Zertifikats das Bilden der Zertifikatskette und die Validierung der Zertifikatskette und/oder die Prüfung von verschiedenen Zertifikatsparameter umfassen. Die Validierungsinformation kann damit entsprechend mehrere Prüfergebnisse enthalten.

Durch das Abfragen der Validierungsinformation bei der Statussammelvorrichtung kann eine dort gespeicherte Validierungsinformation ohne eine Validierung in der Validierungsvorrichtung und somit zeitnah ermittelt und dem ersten Gerät gesendet und damit bereitgestellt werden. Auch das erste Gerät wird durch die ausgelagerte Überprüfung des Zertifikats kaum belastet. Somit eignet sich das Verfahren insbesondere für IoT-Geräte. Lediglich bei einem negativen Prüfergebnis, also wenn die Statussammelvorrichtung keine Validierungsinformation bereitstellt, wird die Validierungsinformation in der ersten Validierungsvorrichtung ermittelt und somit sichergestellt, dass dem ersten Gerät eine Validierungsinformation bereitgestellt wird.

In einer vorteilhaften Ausführungsform wird bei einem negativen Prüfergebnis zusätzlich die in der ersten Validierungsvorrichtung ermittelte Validierungsinformation an die Statussammelvorrichtung weitergeleitet.

Damit wird eine automatische Erstbefüllung bzw. Aktualisierung der Statussammelvorrichtung mit Validierungsinformation sichergestellt. Es ist kein zusätzlicher Vorgang zur Bereitstellung von Validierungsinformationen an die Statussammelvorrichtung notwendig. Dies wird automatisch nach jeder Abfrage einer Validierungsinformation mit negativem Ergebnis, also ohne Rücklieferung der Validierungsinformation durch die Statussammelvorrichtung durch die erste Prüfungsvorrichtung veranlasst und durchgeführt.

In einer vorteilhaften Ausführungsform wird die Validierungsinformation in Form eines Blocks einer Blockkette in einer Blockchain-Speichervorrichtung.

Durch das Abspeichern der Validierungsinformation in Form eines Blocks einer Blockkette (Blockchain) wird eine Veränderung bzw. Manipulation der Validierungsinformation erschwert und die Integrität der gewährleistet. Die Blockchain-Speichervorrichtung kann dabei aus einer verteilten Speichervorrichtung aufgebaut sein, die jeweils eine Instanz der Blockkette enthält. Somit kann die Validierungsinformation ohne weitere Vorkehrungen auf mehrere Speichervorrichtungen verteilt und somit einfach einer ersten Validierungsvorrichtung bereitgestellt werden.

In einer vorteilhaften Ausführungsform wird die Validierungsinformation als Element einer Datenbank in der Statussammelvorrichtung gespeichert.

Das Abspeichern der Validierungsinformation als Element einer Datenbank stellt eine einfache und schnelle Bereitstellungsmöglichkeit dar.

In einer vorteilhaften Ausführungsform wird die Validierungsinformation ohne kryptografischen Schutz von der ersten Validierungseinheit an das erste Gerät gesendet.

Dies ermöglicht eine besonders kurze Antwortzeit zwischen der ersten Validierungsvorrichtung und dem ersten Gerät. In vielen Fällen sind die erste Validierungsvorrichtung und das erste Gerät in einem geschützten Bereich angeordnet, sodass die Übertragungsverbindung schwer zugänglich ist und somit schwerlich manipuliert werden kann, sodass auch ohne kryptografischen Schutz eine Manipulation wenig wahrscheinlich ist.

In einer vorteilhaften Ausführungsform wird die Validierungsinformation von der ersten Validierungsvorrichtung kryptografisch geschützt, insbesondere digital signiert an die Statussammelvorrichtung weitergeleitet und abgespeichert.

Damit wird eine Manipulation der Validierungsinformation beim Transport zur Statussammelvorrichtung reduziert.

In einer vorteilhaften Ausführungsform wird die Validierungsinformation von der ersten Validierungsvorrichtung kryptografisch geschützt, insbesondere digital signiert, an die Statussammelvorrichtung weitergeleitet und dort abgespeichert.

Durch einen kryptografischen Schutz, der von der ersten Validierungsvorrichtung an die Statussammelvorrichtung geschickten Validierungsinformation, wird das Risiko einer Manipulation signifikant reduziert. Bevorzugt wird die Validierungsinformation mit dem privaten Schlüssel der ersten Validierungsvorrichtung signiert. Die Validierungsinformation wird somit auch kryptografisch geschützt in der Statussammelvorrichtung abgespeichert. Somit kann die Integrität der in der Statussammelvorrichtung gespeicherten Validierungsinformation überprüft werden und eine Manipulation der Validierungsinformation in der Statussammelvorrichtung wird dadurch erschwert.

In einer vorteilhaften Ausführungsform wird die durch die erste Überprüfungseinheit kryptografisch geschützte Validierungsinformation als Antwort auf eine Anfrage von der Statussammelvorrichtung an eine zweite Validierungsvorrichtung übermittelt und lediglich nach erfolgreicher Überprüfung des kryptografischen Schutzes in der zweiten Validierungsvorrichtung an das zweite Gerät gesendet.

Dies hat den Vorteil, dass auch die Übertragung der Validierungsinformation von der Statussammelvorrichtung an die zweite Validierungsvorrichtung nur sehr schwer von einem unerlaubten Dritten ausgelesen und manipuliert werden kann. Zum anderen muss lediglich eine Vertrauensbeziehung, bzw. der jeweilige öffentliche Schlüssel der in einem Automatisierungsnetz enthaltenen ersten Validierungsvorrichtungen in jeder zweiten Validierungsvorrichtung bekannt sein.

Ein Gerät bzw. eine Validierungsvorrichtung wird dann als erstes Gerät bzw. eine erste Validierungsvorrichtung bezeichnet, wenn die angefragte Validierungsinformation in der Validierungsvorrichtung selbst ermittelt wird und nicht von der Statussammelvorrichtung bereitgestellt wird. Ein Gerät bzw. eine Validierungsvorrichtung wird dann als zweites Gerät bzw. zweite Validierungsvorrichtung bezeichnet, wenn die angefragte Validierungsinformation von der Statussammelvorrichtung an die Validierungsvorrichtung nicht bereitgestellt wird. Jede Validierungsvorrichtung bzw. jedes Gerät können somit eine erste und zweite Validierungsvorrichtung bzw. ein erstes und zweites Gerät sein.

In einer vorteilhaften Ausführungsform sendet die zweite Validierungsvorrichtung die Validierungsinformation ohne kryptografischen Schutz an das zweite Gerät.

Die zweite Validierungsvorrichtung sendet Validierungsinformation beispielsweise ohne eine digitale Signatur an das zweite Gerät. Dies hat den Vorteil, dass die Validierungsinformation ohne Verzögerung, die durch eine Verifikation der Validierungsinformation in der zweiten Validierungsvorrichtung entstehen würde, weitergeleitet wird und somit die Antwortzeit zur Beantwortung der Anfrage nach der Validierungsinformation verkürzt und somit optimiert. Dies ist insbesondere dann vorteilhaft, wenn die zweite Validierungsvorrichtung und das zweite Gerät in einer zugangsgeschützten bzw. nicht öffentlich zugänglichen Umgebung angeordnet sind.

In einer vorteilhaften Ausführungsform sendet die zweite Validierungsvorrichtung die Validierungsinformation kryptografisch geschützt an das zweite Gerät.

Dies hat den Vorteil, dass auch dieser letzte Übertragungsabschnitt zwischen der zweiten Validierungsvorrichtung und dem zweiten Gerät vor Manipulation und Auslesen übertragen werden.

Die Validierungsinformation kann dabei entweder den kryptografischen Schutz der ersten Validierungsvorrichtung aufweisen, das heißt nach der Überprüfung beispielsweise der digitalen Signatur der ersten Vorrichtung über die Validierungsinformation wird diese Signatur wieder mit der Validierungsinformation zum zweiten Gerät weitergeschickt. Das zweite Gerät muss in diesem Fall eine Vertrauensbeziehung zu jeder ersten Validierungsvorrichtung haben, das heißt beispielsweise den öffentlichen Schlüssel jeder dieser ersten Validierungsvorrichtungen kennen. Es muss jedoch keine neue Signatur berechnet werden, sodass die Bearbeitungszeit dadurch verkürzt ist und die gesamte Antwortzeit auf die Anfrage verkürzt ist. Die Validierungsinformation kann aber auch durch die zweite Validierungsvorrichtung kryptografisch geschützt werden. In diesem Fall wird beispielsweise über die positiv überprüfte Validierungsinformation eine digitale Signatur mit dem privaten Schlüssel der zweiten Validierungsvorrichtung gebildet und an das zweite Gerät gesendet. In diesem Fall muss das zweite Gerät lediglich eine Vertrauensbeziehung zur zweiten Validierungsvorrichtung aufweisen, beispielsweise den öffentlichen Schlüssel lediglich der zweiten Validierungsvorrichtung kennen.

In einer vorteilhaften Ausführungsform wird die mittels der ersten Überprüfungseinheit kryptografisch geschützte Validierungsinformation in der Statussammelvorrichtung überprüft und bei positivem Prüfergebnis der kryptografische Schutz mittels der ersten Überprüfungseinheit durch einen kryptografischen Schutz mittels der Statussammelvorrichtung ersetzt und in der Statussammelvorrichtung abgespeichert.

Dies hat den Vorteil, dass die zweite Validierungsvorrichtung oder auch das zweite Gerät lediglich eine Vertrauensbeziehung zu der Statussammelvorrichtung haben muss. Das heißt, die zweite Validierungsvorrichtung sowie das zweite Gerät müssen beispielsweise lediglich den öffentlichen Schlüssel der Statussammelvorrichtung kennen. Somit ist auch eine Aktualisierung dieses einen Schlüssels einfach und mit geringem Übertragungs- und Administrationsaufwand möglich in Vergleich.

In einer vorteilhaften Ausführungsform wird die Validierungsinformation lediglich dann von der Statussammelvorrichtung an die Validierungsvorrichtung übermittelt, wenn die Validierungsinformation kürzer als eine vorgegebene Zeitdauer in der Statussammelvorrichtung gespeichert ist.

Die vorgegebene Zeitdauer kann beispielsweise von der ersten Validierungsvorrichtung mit der Validierungsinformation an die Statussammelvorrichtung übermittelt werden und beispielsweise die Zeitdauer bis zur frühesten nächsten Aktualisierung einer Zertifikatwiderrufungsliste oder der Zeitdauer entsprechen. Die vorgegebene Zeitdauer kann aber auch fest vorgegeben in der Statussammelvorrichtung vorliegen oder aus dem Zeitpunkt des Eingangs der Validierungsinformation in der Statussammelvorrichtung von dieser berechnet werden. Dadurch wird sichergestellt, dass die Validierungsinformation zum Zeitpunkt des Abrufens den gültigen Status wiedergibt.

In einer vorteilhaften Ausführungsform werden die Verfahrensschritte mittels Protokollnachrichten entsprechend einem standardisierten Zertifikatvalidierungsprotokoll, insbesondere einem Serverbasierten Zertifikat-Validierungsprotokoll, kurz SCVP ausgeführt werden.

Somit können vorhandene, insbesondere standardisierte Zertifikatsvalidierungsprotokolle als Basis für das beschriebene Verfahren genutzt werden. Es sind lediglich wenige Erweiterungen, beispielsweise um eine Abfragenachricht, die eine erste Validierungsvorrichtung, die als SCVP-Server ausgebildet ist, an die Statussammelvorrichtung sendet. Vorhandene Kenner in dem Zertifikatsvalidierungsprotokoll, beispielsweise ein Flag, das die Verwendung von gespeicherten Validierungsinformationen erlaubt, können für das beschriebene Verfahren weiterverwendet werden. Somit bleibt der Aufwand zur Implementierung des Verfahrens überschaubar.

Ein zweiter Aspekt der Erfindung betrifft eine Validierungsvorrichtung zur Validierung eines digitalen Zertifikats, die stellvertretend für mindestens ein erstes Gerät das Zertifikat eines Kommunikationspartners überprüft, umfassend mindestens einen Prozessor, der derart ausgebildet ist, ein Anfordern einer Validierung des Zertifikats des Kommunikationspartners von dem ersten Gerät zu empfangen, eine Validierungsinformation bei einer Statussammelvorrichtung abzufragen, zu überprüfen, ob eine Validierungsinformation von der Statussammelvorrichtung empfangen wurde und die Validierungsinformation an das erste Gerät zu senden, und lediglich bei einem negativen Prüfergebnis, die Validierungsinformation des Zertifikats selbst zu ermitteln und die ermittelte Validierungsinformation an die Statussammelvorrichtung weiterzuleiten.

Die Validierungsvorrichtung kann somit eine zuvor in der Statussammelvorrichtung abgelegte Validierungsinformation abfragen und erzeugt somit eine geringe Prozessorlast zur Ermittlung der Validierungsinformation. Wird keine Validierungsinformation von der Statussammelvorrichtung als Antwort auf das Anfordern ermittelt, so wird lediglich in diesen Fällen die Validierungsinformation selbst erzeugt und zusätzlich zum Senden der Validierungsinfo an das erste Gerät die Validierungsinformation an die Statussammelvorrichtung weitergeleitet. Eine derart ausgebildete Validierungsvorrichtung weist nicht nur eine verkürzte Antwortzeit auf, sondern befüllt und aktualisiert auch automatisch die Statussammelvorrichtung.

Ein dritter Aspekt der Erfindung betrifft eine Statussammelvorrichtung umfassend mindestens einen Prozessor, dadurch gekennzeichnet, dass dieser derart ausgebildet ist, eine Anforderung einer Validierungsinformation durch die erste Validierungsvorrichtung zu empfangen, die Validierungsinformation an die erste Validierungsvorrichtung zu übermitteln und/oder die Validierungsinformation von der ersten Validierungsvorrichtung zu empfangen und abzuspeichern, und
eine Antwortnachricht ohne Validierungsinformation auf eine Anforderung an die erste Validierungsvorrichtung (15) sendet, wenn kein Validierungsergebnis ermittelt wird, und die Validierungsinformation lokal in der ersten Validierungsvorrichtung (15) ermittelt wird, da keine Validierungsinformation enthalten ist, wenn in der ersten Validierungsvorrichtung (15) eine empfangene Nachricht auf die Validierungsinformation hin überprüft wird.

Eine solche Statussammelvorrichtung hält Validierungsinformationen einer Vielzahl von Geräten bereit, die auf Anfrage an ein erstes oder auch zweites Gerät übermittelt werden. Eine solche zentrale Statussammelvorrichtung kann einfacher als ein verteiltes System geschützt und aktualisiert werden.

Ein vierter Aspekt der Erfindung betrifft ein Computerprogrammprodukt, umfassend ein nichtflüchtiges computerlesbares Medium, das direkt in einen Speicher eines digitalen Computers ladbar ist, umfassend Programmcodeteile, die dazu geeignet sind, die Schritte des Verfahrens nach einem der beschriebenen Verfahrensschritte durchzuführen.

Sofern es in der nachfolgenden Beschreibung nicht anders angegeben ist, beziehen sich die Begriffe "Anfragen", "Anfordern", "Überprüfen", "Senden" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Signale. Insbesondere sollte der Ausdruck "Gerät" oder "Computer" möglichst breit ausgelegt werden, um insbesondere alle elektronischen Geräte mit Datenverarbeitungseigenschaften abzudecken. Geräte können dabei insbesondere Geräte in einer Automatisierungsanlage, die rechnergestützt Daten verarbeiten können, Prozessoren und andere elektronische Geräte zur Datenverarbeitung sein.

Unter einem Prozessor kann im Zusammenhang mit der Erfindung beispielsweise ein Hauptprozessor, ein Mikroprozessor oder ein Mikrocontroller, beispielsweise eine anwendungsspezifisch integrierte Schaltung oder ein digitaler Signalprozessor, möglicherweise in Kombination mit einer Speichereinheit zum Speichern von Programmbefehlen etc. verstanden werden. Ein Prozessor kann auch mehrere Einzelprozessoren unterschiedlichster Ausprägung umfassen. Eine jeweilige "Einheit" kann hardwaretechnisch und/oder auch softwaretechnisch implementiert sein. Bei einer hardwaretechnischen Implementierung kann die jeweilige Einheit als Vorrichtung oder als Teil einer Vorrichtung, z. B. als Computer oder als Mikroprozessor oder als Steuerrechner ausgebildet sein. Bei einer softwaretechnischen Implementierung kann die jeweilige Einheit als Computerprogrammprodukt, als eine Funktion, als eine Routine, als Teil eines Programmcodes oder als ausführendes Objekt ausgebildet sein.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens, der Validierungsvorrichtung sowie der Statussammelvorrichtung sind in den Zeichnungen beispielhaft dargestellt und werden anhand der nachfolgenden Beschreibung näher erläutert. Es zeigen:
- Fig. 1: ein Anwendungsszenario mit Ausführungsbeispielen der erfindungsgemäßen ersten und zweiten Validierungsvorrichtung sowie der Statussammelvorrichtung, in dem das erfindungsgemäße Verfahren ausgeführt wird in Blockdarstellung;
- Fig. 2: ein erstes Ausführungsbeispiel des erfindungsgemäßen Verfahrens als Flussdiagramm;
- Fig. 3: ein zweites Ausführungsbeispiel des erfindungsgemäßen Verfahrens als Nachrichtenaustauschdiagramm;
- Fig. 4: ein erstes Ausführungsbeispiel einer erfindungsgemäßen Validierungsvorrichtung in Blockdarstellung; und
- Fig. 5: ein erstes Ausführungsbeispiel einer erfindungsgemäßen Statussammelvorrichtung in Blockdarstellung.

Einander entsprechende Teile sind in allen Figuren mit dem gleichen Bezugszeichen versehen.

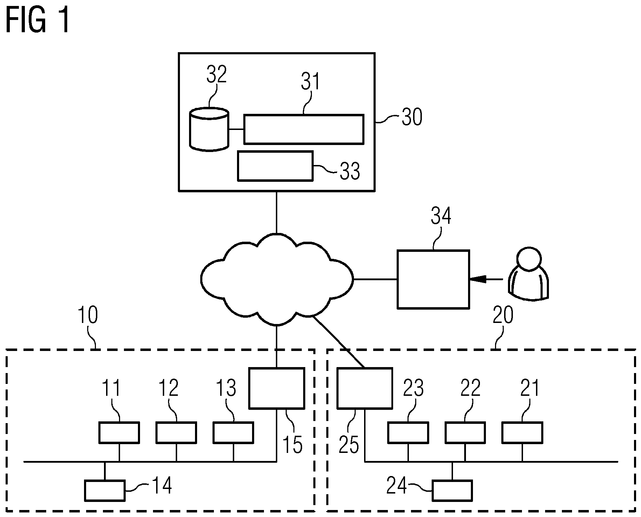

Figur 1 zeigt ein Kommunikationsnetzwerk, beispielsweise einer Automatisierungsanlage, mit zwei Netzwerkzonen 10, 20, beispielsweise zwei unterschiedliche Fertigungsbereiche, mit Geräten 11, 12, 13, 14 in der ersten Netzwerkzone sowie Geräten 21, 22, 23, 24 in der zweiten Netzwerkzone 20. Die Geräte können beispielsweise Feldgeräte oder Steuereinheiten sein. In der ersten sowie der zweiten Netzwerkzone ist jeweils eine Validierungsvorrichtung 15, 25 angeordnet, die lokal in der jeweiligen Netzwerkzone als Stellvertreter für ein Gerät 11 ..., 14 bzw. die zweite Validierungsvorrichtung 25 für die Geräte 21, ..., 24 eine Zertifikatsvalidierung durchführt. Kommunikationspartner, dessen Zertifikat zur Validierung angefragt wird, kann neben den Geräten 11,.., 14, 21,.., 24 auch eine externer Kommunikationspartner 34, beispielsweise eine Administrationsterminal oder ein Anwendungsserver sein, das über ein öffentliches Netzwerk mit der ersten und zweiten Netzwerkzone verbunden ist.

Bei Verwendung eines bekannten Zertifikatsvalidierungsprotokolls, wie beispielsweise dem SCVP-Protokoll, fordert ein Gerät, hier beispielsweise das erste Gerät 11, bei der ersten Validierungsvorrichtung 15 eine Validierung eines oder mehrerer Zertifikate an. Zusätzlich kann das erste Gerät 11 mehrere Teilprüfungen, beispielsweise das Bilden der Zertifikatskette und dessen Überprüfung und/oder auch eine Überprüfungsrichtlinie festlegen. Die Prüfungsrichtlinie gibt an, welche Teilprüfungen im Zertifikat durchgeführt werden. Dies beinhaltet beispielsweise die Überprüfung der Verwendungsmöglichkeiten des Schlüssels, die zu verwendenden Root-Zertifikate und dergleichen. Das erste Gerät kann in der Anfrage ebenfalls Informationen beschreiben, die es als Ergebnis erwartet. Dazu gehört beispielsweise die Prüfung eines Widerrufungsstatus aller Zertifikate in einer Zertifikatskette oder auch die Prüfung der kompletten Zertifikatskette als Datenelement. Das erste Gerät 11 kann ebenfalls angeben, ob die Antwort von der ersten Validierungsvorrichtung 15 geschützt übermittelt werden soll. Ein solcher kryptografischer Schutz kann beispielsweise durch eine digitale Signatur mit einem privaten Schlüssel der ersten Validierungsvorrichtung realisiert werden. Ebenso kann das erste Gerät 11 in der Anfrage angeben, ob er eine in der ersten Validierungsvorrichtung gespeichertes Ergebnis der Validierung, die im Weiteren als Validierungsinformation bezeichnet wird, akzeptiert.

Erfindungsgemäß wird nun das Ergebnis der Zertifikatsvalidierung, also die Validierungsinformation, durch eine Statussammelvorrichtung 30 bereitgestellt. Diese auf der Statussammelvorrichtung 30 bereitgestellte Validierungsinformation kann genutzt werden, um die Antwortzeit zwischen dem Senden der Abfrage durch das erste Gerät 11 bis zur Antwort und Bereitstellung der angefragten Validierungsinformation auf dem ersten Gerät 11 zum selben Zertifikat zu reduzieren, da nicht mehr alle Validierungen separat in der ersten Validierungsvorrichtung 15 durchgeführt werden müssen. Die Validierungsinformation kann in einem öffentlichen Verzeichnis in einer Statusdatenbank 32, die von einer Steuerungsvorrichtung 31 administriert und gesteuert wird, bereitgestellt werden. Die Validierungsinformation kann aber auch durch eine Blockchain-Speichervorrichtung 33 gespeichert und bereitgestellt werden. Im ersten Fall wird die Validierungsinformation als Element der Datenbank 32 in der Statussammelvorrichtung gespeichert. Bei der zweiten Alternative wird die Validierungsinformation in Form eines Blocks einer Blockkette in der Blockchain-Speichervorrichtung 33, die auch als verteilte Speichervorrichtung ausgebildet sein kann, gespeichert.

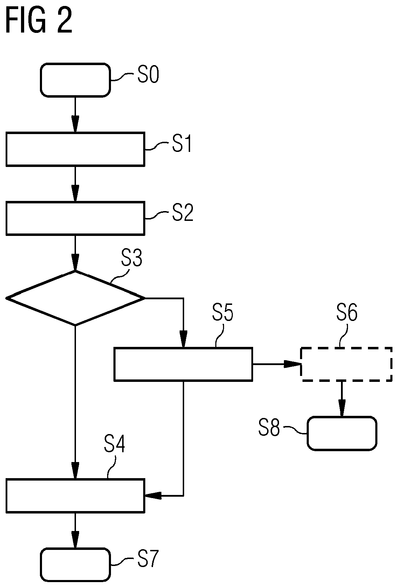

Anhand von Figur 2 werden nun die einzelnen Verfahrensschritte im Detail beschrieben. In einem Ausgangszustand, siehe S0, möchte das erste Gerät, beispielsweise Gerät 11 in Figur 1, ein Zertifikat eines Kommunikationspartners überprüfen. Der Kommunikationspartner kann ein beliebiges Gerät in der ersten oder zweiten Netzwerkzone 10, 20 oder auch ein externer Kommunikationspartner 34 sein. Im ersten Verfahrensschritt S1 fordert das erste Gerät 11 eine Validierung des Zertifikats bei einer ersten Validierungsvorrichtung 15 an. Dazu sendet das erste Gerät 11 beispielsweise eine Anforderungsnachricht, die das zu überprüfende Zertifikat enthält, an die erste Validierungsvorrichtung 15. Eine solche Anforderung bzw. Anforderungsnachricht kann auch die Validierung mehrerer Zertifikate umfassen.

Anschließend in Schritt S2 fragt die erste Validierungsvorrichtung 15 eine Validierungsinformation bei einer Statussammelvorrichtung 30 an. Die Statussammelvorrichtung 30 ermittelt anhand der in einer Anforderungsnachricht enthaltene Information, also einer Spezifizierung des Zertifikats und optional weiterer angeforderter Teilprüfungen, eine Validierungsinformation an. Sind in der Statussammelvorrichtung 30 ein oder mehrere Validierungsinformationen bzw. Teilvalidierungsinformationen verfügbar, werden diese beispielsweise in einer Antwortnachricht auf die Abfrage an die erste Validierungsvorrichtung 15 übermittelt. Können keine bzw. kann keine Validierungsinformation in der Statussammelvorrichtung 30 ermittelt werden, so wird bevorzugt ebenfalls eine Antwortnachricht an die erste Validierungsvorrichtung 15 übermittelt, aber keine Validierungsinformation enthält, gesendet.

Im Verfahrensschritt S3 wird in der ersten Validierungsvorrichtung 15 überprüft, ob eine Validierungsinformation von der Statussammelvorrichtung 30 empfangen wurde. Anschließend im Verfahrensschritt S4 wird die Validierungsinformation von der ersten Validierungsvorrichtung 15 an das erste Gerät gesendet und somit die Anforderung einer Zertifikatsvalidierung beantwortet und damit abgeschlossen, siehe S7. Wird bei der Überprüfung, siehe S3, ein negatives Prüfergebnis ermittelt, so wird die Validierungsinformation des Zertifikats in der ersten Validierungsvorrichtung 15 ermittelt, siehe S5, und an das erste Gerät gesendet, siehe S4.

Somit wird sichergestellt, dass dem ersten Gerät 11 auf alle Fälle eine Validierungsinformation bereitgestellt wird.

Wurde die Validierungsinformation in der ersten Validierungsvorrichtung 15 ermittelt, siehe S5, so wird in einem weiteren Verfahrensschritt S6 die Validierungsinformation von der ersten Validierungsvorrichtung 15 an die Statussammelvorrichtung 30 weitergeleitet und das Verfahren beendet, siehe S8.

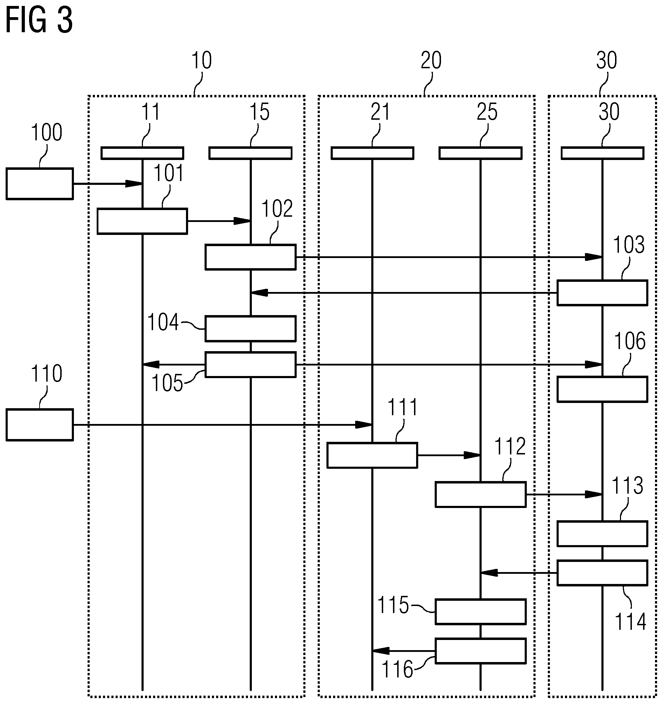

In Figur 3 wird das erfindungsgemäße Verfahren anhand eines konkreten Beispiels, in dem das erste Gerät 11 aus der ersten Netzwerkzone 10 eine Zertifikatsanfrage an die erste Validierungsvorrichtung 15 sendet, zu dem noch keine Validierungsinformation in der Statussammelvorrichtung 30 vorliegt. Anschließend wird von einem zweiten Gerät 21, das in der zweiten Netzwerkzone 20 angeordnet ist, eine Anfrage zur Validierung des gleichen Zertifikates bei der zweiten Validierungsvorrichtung 25, die ebenfalls in der zweiten Netzwerkzone 20 angeordnet ist, angefordert.

Als Ausgangspunkt 100 liegt wiederum der Bedarf im ersten Gerät 11 vor, ein Zertifikat eines Kommunikationspartners zu validieren. Dazu wird im ersten Gerät 11 eine Anforderungsnachricht mit dem entsprechenden Zertifikat des Kommunikationspartners und optional weiteren Angaben zu den gewünschten Teilprüfungen an die erste Validierungsvorrichtung 15 gesendet, siehe 101. Die erste Validierungsvorrichtung 15 sendet beispielsweise eine Anfragenachricht an der Statussammelvorrichtung 30 und fragt die Rücklieferung von Validierungsinformationen zu diesem Zertifikat an, siehe 102. Die Statussammelvorrichtung 30 überprüft daraufhin, ob ein solches Validierungsergebnis vorliegt.

In diesem Fall kann kein Validierungsergebnis ermittelt werden, sodass die Statussammeleinheit 30 eine Antwortnachricht ohne Validierungsinformation auf die Anforderung an die erste Validierungsvorrichtung 15 sendet, siehe 103. In der ersten Validierungsvorrichtung 15 wird nun die empfangene Nachricht auf eine Validierungsinformation hin überprüft und, da keine Validierungsinformation enthalten ist, das Zertifikat lokal in der ersten Validierungsvorrichtung 15 überprüft und somit die Validierungsinformation ermittelt, siehe 104. Anschließend sendet die erste Validierungsvorrichtung 15 die Validierungsinformation in einer ungesicherten Antwortnachricht an das erste Gerät 11 und in einer kryptografisch geschützten Nachricht auch an die Statussammelvorrichtung 30, siehe 105. Die Validierungsinformation wird in der Statusspeichervorrichtung gespeichert, siehe 106, und kann nun auch anderen Geräten zur Verfügung gestellt werden.

Die Validierungsinformation kann dabei kryptografisch geschützt, insbesondere digital mit einem privaten Schlüssel der ersten Validierungsvorrichtung 15 signiert in der Statussammelvorrichtung 30 abgespeichert werden. Alternativ wird der kryptografische Schutz der Validierungsinformation durch die erste Validierungsvorrichtung 15 von der Statussammelvorrichtung 30 ersetzt durch einen digitalen Schutz durch die Statussammelvorrichtung 30. Beispielsweise kann die digitale Signatur der Validierungsinformation durch die erste Validierungsvorrichtung 15 durch eine digitale Signatur der Statussammelvorrichtung 30 ersetzt werden.

Im Weiteren liegt nun in einem zweiten Gerät 21 ebenfalls der Bedarf vor, das gleiche Zertifikat zu validieren, siehe 110. Entsprechend dem bereits beschriebenen Verfahren wird nun eine Validierung des Zertifikats vom zweiten Gerät 21 bei der zweiten Validierungsvorrichtung 25 angefordert, siehe 111. Die zweite Validierungsvorrichtung 25 fragt bei der Statussammelvorrichtung 30 die Validierungsinformation zu dem Zertifikat an, siehe 112. Da die Validierungsinformation nun in der Statussammelvorrichtung 30 vorliegt, wird diese von der Statussammelvorrichtung 30 ermittelt, siehe 113 und in einer Antwortnachricht an die zweite Validierungsvorrichtung 25 übermittelt, siehe 114. In der zweiten Validierungsvorrichtung 25 wird nun der kryptografische Schutz der Validierungsinformation überprüft, siehe 115 und anschließend die Validierungsinformation an das zweite Gerät 21 übermittelt, siehe 116.

Die Validierungsinformation kann entweder ungeschützt oder alternativ mit dem kryptografischen Schutz der empfangenen Validierungsinformation bzw. der empfangenen Nachricht an das zweite Gerät 21 gesendet werden. Alternativ kann die zweite Validierungsvorrichtung 25 die Validierungsinformation selbst mit einem kryptografischen Schutz, beispielsweise einer Signatur mit dem privaten Schlüssel der zweiten Validierungsvorrichtung 25 signiert an das zweite Gerät 21 gesendet werden. Entsprechend muss jeweils der öffentliche Schlüssel der Komponente, die die Validierungsinformation kryptografisch geschützt hat, in den empfangenden Einheiten, beispielsweise der Statussammelvorrichtung 30 bzw. der zweiten Validierungsvorrichtung 25 oder auch dem zweiten Gerät 25 vorliegen. Je nach Vertrauenswürdigkeit der einzelnen Komponenten ist dazu ein mehr oder weniger auffälliges Schlüsselmanagement notwendig.

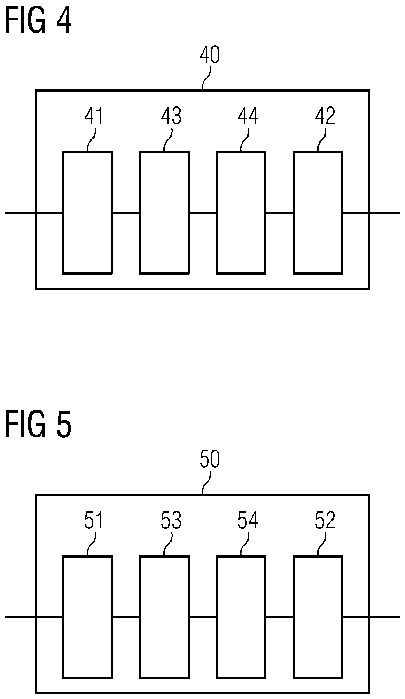

In Figur 4 ist eine Validierungsvorrichtung 40 dargestellt. Sie umfasst eine erste Ein- und Ausgabeeinheit 41, die derart ausgebildet ist, eine Anforderung zur Validierung des Zertifikats des Kommunikationspartners vom ersten Gerät zu empfangen und die ermittelte Validierungsinformation an das erste Gerät zu senden. Die Validierungsvorrichtung 40 umfasst des Weiteren eine zweite Ein- und Ausgabeeinheit 42, die derart ausgebildet ist, Validierungsinformationen bei einer Statussammelvorrichtung abzufragen und eine in der Validierungsvorrichtung 40 selbst ermittelte Validierungsinformation an die Statussammelvorrichtung weiterzuleiten. Die Validierungsvorrichtung 40 umfasst des Weiteren eine Überprüfungseinheit 43 und eine Validierungseinheit 44. Die Überprüfungseinheit 43 überprüft die Antwort zur Anforderungsnachricht von der Statussammelvorrichtung auf eine enthaltene Validierungsinformation. Die Validierungseinheit 44 validiert das Zertifikat selbst, führt also selbst eine Zertifikatsvalidierung durch. Die genannten Einheiten werden dabei durch eine oder mehrere Prozessoren oder elektronische Schaltungen ausgeführt.

Figur 5 zeigt eine Statussammelvorrichtung 50. Sie umfasst eine Steuerungseinheit 51, eine Ein-/Ausgabeeinheit 54 und eine Datenbank 52 sowie alternativ oder auch zusätzlich eine Blockchain-Speichervorrichtung 53. Die Ein-/Ausgabeeinheit 54 ist derart ausgebildet, eine Anforderungsnachricht von einer Validierungsvorrichtung zu empfangen und eine Antwortnachricht darauf an die Validierungsvorrichtung zurückzusenden. Die Steuerungseinheit 51 ist derart ausgebildet, die angefragte Validierungsinformation bei der Datenbank 52 bzw. der Blockchain-Speichervorrichtung 53 abzufragen und empfangene Validierungsinformationen in die Datenbank 52 bzw. die Blockchain-Speichervorrichtung 53 einzupflegen. Die Steuerungseinheit 51 ist des Weiteren derart ausgebildet, den kryptografischen Schutz der Validierungsinformation zu überprüfen. Die Steuerungseinheit 51 kann auch derart ausgebildet sein, eine Validierungsinformation selbst kryptografisch zu schützen, beispielsweise mit dem eigenen privaten Schlüssel zu signieren.

Mit dem vorgeschlagenen Verfahren zur Verteilung der Validierungsinformation von der Validierungsvorrichtung an eine zentrale Statussammelvorrichtung kann die Antwortzeit der Validierungsvorrichtung an das anfragende Gerät reduziert werden, da diese weniger Rechenzeit für die Validierung, insbesondere langer Zertifikatsketten, benötigt. Die schnellere Antwortzeit der Validierungsvorrichtung an das anfragende Gerät setzt damit auch die Reaktionszeit des anfragenden Geräts herab.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt. Die Erfindung wird durch den Umfang der beigefügten Ansprüche offenbart.

## Patentansprüche

1. Verfahren zur Validierung eines digitalen Zertifikats, wobei eine Validierungsvorrichtung (15, 25) stellvertretend für ein erstes Gerät (11,..,14) das Zertifikat eines Kommunikationspartners überprüft, umfassend die Verfahrensschritte:
- Anfordern (S1) einer Validierung des Zertifikats des Kommunikationspartners durch das erste Gerät (11,..,14) bei einer ersten Validierungsvorrichtung (15),
- Abfragen (S2) einer Validierungsinformation durch die erste Validierungsvorrichtung (15) bei einer Statussammelvorrichtung (30),
- Überprüfen (S3) in der ersten Validierungsvorrichtung (15), ob eine Validierungsinformation von der Statussammelvorrichtung (30) empfangen wurde, und
- Senden (S4) der Validierungsinformation von der ersten Validierungsvorrichtung (15) an das erste Gerät (11), wobei lediglich bei einem negativen Prüfergebnis,
die Validierungsinformation des Zertifikats in der ersten Validierungsvorrichtung (15) ermittelt (S5) wird.

2. Verfahren nach Anspruch 1, wobei bei einem negativen Prüfergebnis zusätzlich die in der ersten Validierungsvorrichtung (15) ermittelte Validierungsinformation an die Statussammelvorrichtung (30) weitergeleitet wird (S5).

3. Verfahren nach einem der vorangehenden Ansprüche, wobei die Validierungsinformation in Form eines Blocks einer Blockkette in einer Blockchain-Speichervorrichtung (33) gespeichert wird.

4. Verfahren nach Anspruch 1 oder 2, wobei die Validierungsinformation als Element einer Datenbank (32) in der Statussammelvorrichtung (30) gespeichert wird.

5. Verfahren nach einem der vorangehenden Ansprüche, wobei die Validierungsinformation ohne kryptographischen Schutz von der ersten Validierungseinheit (15) an das erste Gerät (11) gesendet wird.

6. Verfahren nach einem der vorangehenden Ansprüche, wobei die Validierungsinformation von der ersten Validierungsvorrichtung (15) kryptographisch geschützt, insbesondere digital signiert, an die Statussammelvorrichtung (30) weitergeleitet und in der Statussammelvorrichtung (30) abgespeichert wird.

7. Verfahren nach Anspruch 6, wobei die durch die erste Validierungsvorrichtung (15) kryptographisch geschützte Validierungsinformation als Antwort auf eine Anfrage von der Statussammelvorrichtung (30) an eine zweite Validierungsvorrichtung (25) übermittelt wird und lediglich nach erfolgreicher Überprüfung des kryptographischen Schutzes in der zweiten Validierungsvorrichtung (25) an das zweite Gerät (21) gesendet wird.

8. Verfahren nach Anspruch 7, wobei die zweite Validierungsvorrichtung (25) die Validierungsinformation ohne kryptographischen Schutz an das zweite Gerät (21) sendet.

9. Verfahren nach Anspruch 7, wobei die zweite Validierungsvorrichtung (25) die Validierungsinformation kryptographisch geschützt (15) an das zweite Gerät (21) sendet.

10. Verfahren nach Anspruch 6, wobei die mittels der ersten Überprüfungseinheit (15) kryptographisch geschützte Validierungsinformation in der Statussammelvorrichtung (30) überprüft und bei positivem Prüfungsergebnis der kryptographische Schutz mittels der ersten Überprüfungseinheit (15) durch einen kryptographischen Schutz mittels der Statussammelvorrichtung (30) ersetzt und in der Statussammelvorrichtung (30) abgespeichert wird.

11. Verfahren nach einem der vorangehenden Ansprüche, wobei die Validierungsinformation lediglich dann von der Statussammelvorrichtung (30) an die Validierungsvorrichtung (15) übermittelt wird, wenn die Validierungsinformation kürzer als eine vorgegebene Zeitdauer in der Statussammelvorrichtung (30) gespeichert ist.

12. Verfahren nach einem der vorangehenden Ansprüche, wobei die Verfahrensschritte mittels Protokollnachrichten entsprechend einem standardisierten Zertifikatvalidierungsprotokoll, insbesondere einem Serverbasierten Zertifikatvalidierungs-Protokoll SCVP, ausgeführt werden.

13. Validierungsvorrichtung zur Validierung eines digitalen Zertifikats, wobei
die Validierungsvorrichtung stellvertretend für mindestens ein erstes Gerät (11,..,14) das Zertifikat eines Kommunikationspartners überprüft, umfassend mindestens einen Prozessor, der derart ausgebildet ist:
- ein Anfordern (S1) einer Validierung des Zertifikats des Kommunikationspartners von dem erstes Gerät (11,..,14) zu empfangen,
- eine Validierungsinformation bei einer
Statussammelvorrichtung (30) abzufragen (S2),
- zu überprüfen (S3), ob eine Validierungsinformation von der Statussammelvorrichtung (30) empfangen wurde, und
- die Validierungsinformation an das erste Gerät (11) zu senden (S6), und
lediglich bei einem negativen Prüfergebnis,
- die Validierungsinformation des Zertifikats selbst zu ermitteln (S4), und
- die ermittelte Validierungsinformation an die Statussammelvorrichtung (30) weiterzuleiten (S5).

14. Statussammelvorrichtung umfassend mindestens einen Prozessor, wobei dieser derart ausgebildet ist:
- eine Anforderungsnachricht einer Validierungsinformation durch eine erste Validierungsvorrichtung (15) zu empfangen,
- die Validierungsinformation an die erste Validierungsvorrichtung (15) zu übermitteln, und/oder die Validierungsinformation von der ersten Validierungsvorrichtung (15) zu empfangen und abzuspeichern, und
- eine Antwortnachricht ohne Validierungsinformation auf eine Anforderung an die erste Validierungsvorrichtung (15) zu senden, wenn kein Validierungsergebnis ermittelt wird, und die Validierungsinformation lokal in der ersten Validierungsvorrichtung (15) ermittelt wird, da keine Validierungsinformation enthalten ist, wenn in der ersten Validierungsvorrichtung (15) eine empfangene Nachricht auf die Validierungsinformation hin überprüft wird.

15. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 12 durchzuführen.

## Claims

1. Method for the validation of a digital certificate, wherein a validation apparatus (15, 25) checks the certificate of a communication partner on behalf of a first device (11,...,14), comprising the method steps of:
- the first device (11,...,14) requesting (S1) validation of the certificate of the communication partner at a first validation apparatus (15),
- the first validation apparatus (15) querying (S2) validation information at a status collection apparatus (30),
- checking (S3), in the first validation apparatus (15), whether validation information has been received from the status collection apparatus (30), and
- transmitting (S4) the validation information from the first validation apparatus (15) to the first device (11), wherein, only in the event of a negative inspection result,
the validation information of the certificate is determined (S5) in the first validation apparatus (15).

2. Method according to Claim 1, wherein, in the event of a negative inspection result, the validation information determined in the first validation apparatus (15) is additionally forwarded (S5) to the status collection apparatus (30).

3. Method according to either of the preceding claims, wherein the validation information is stored in the form of a block of a blockchain in a blockchain storage apparatus (33).

4. Method according to Claim 1 or 2, wherein the validation information is stored in the status collection apparatus (30) as an element of a database (32).

5. Method according to one of the preceding claims, wherein the validation information is transmitted from the first validation unit (15) to the first device (11) without cryptographic protection.

6. Method according to one of the preceding claims, wherein the validation information is cryptographically protected, in particular digitally signed, by the first validation apparatus (15), forwarded to the status collection apparatus (30) and stored in the status collection apparatus (30).

7. Method according to Claim 6, wherein the validation information cryptographically protected by the first validation apparatus (15) is transmitted from the status collection apparatus (30) to a second validation apparatus (25) in response to a request and transmitted to the second device (21) only after a successful check of the cryptographic protection in the second validation apparatus (25).

8. Method according to Claim 7, wherein the second validation apparatus (25) transmits the validation information to the second device (21) without cryptographic protection.

9. Method according to Claim 7, wherein the second validation apparatus (25) transmits the validation information to the second device (21) with cryptographic protection (15).

10. Method according to Claim 6, wherein the validation information cryptographically protected by way of the first checking unit (15) is checked in the status collection apparatus (30) and, in the event of a positive inspection result, the cryptographic protection by way of the first checking unit (15) is replaced with cryptographic protection by way of the status collection apparatus (30) and is stored in the status collection apparatus (30).

11. Method according to one of the preceding claims, wherein the validation information is transmitted from the status collection apparatus (30) to the validation apparatus (15) only when the validation information is stored in the status collection apparatus (30) for less than a predefined period.

12. Method according to one of the preceding claims, wherein the method steps are implemented by way of protocol messages in accordance with a standardized certificate validation protocol, in particular a Server-based Certificate Validation Protocol SCVP.

13. Validation apparatus for validating a digital certificate, wherein
the validation apparatus checks the certificate of a communication partner on behalf of at least one first device (11,...,14), comprising at least one processor that is designed:
- to receive a request (S1) to validate the certificate of the communication partner from the first device (11,...,14),
- to query (S2) validation information at a status collection apparatus (30),
- to check (S3) whether validation information has been received from the status collection apparatus (30), and
- to transmit (S6) the validation information to the first device (11), and,
only in the event of a negative inspection result,
- to determine (S4) the validation information of the certificate itself, and
- to forward (S5) the determined validation information to the status collection apparatus (30).

14. Status collection apparatus comprising at least one processor, wherein said processor is designed:
- to receive a request message for validation information by a first validation apparatus (15),
- to transmit the validation information to the first validation apparatus (15), and/or
to receive the validation information from the first validation apparatus (15) and store it, and
- to transmit a response message without validation information to a request to the first validation apparatus (15) if no validation result is determined, and
the validation information is determined locally in the first validation apparatus (15), since no validation information is present when a received message is checked for the validation information in the first validation apparatus (15).

15. Computer program product comprising a non-volatile computer-readable medium that is able to be loaded directly into a memory of a digital computer, comprising program code parts that are suitable for performing the steps of the method according to one of Claims 1 to 12.

## Revendications

1. Procédé de validation d'un certificat numérique, dans lequel un dispositif de validation (15, 25) vérifie le certificat d'un partenaire de communication en lieu et place d'un premier appareil (11, ..., 14), comprenant les étapes de procédé suivantes :
- demander (S1) une validation du certificat du partenaire de communication par le premier appareil (11, ..., 14) au niveau d'un premier dispositif de validation (15),
- lancer une requête (S2) d'information de validation par le premier dispositif de validation (15) au niveau d'un dispositif de collecte de statut (30),
- vérifier (S3) dans le premier dispositif de validation (15) si une information de validation a été reçue par le dispositif de collecte de statut (30), et
- envoyer (S4) l'information de validation par le premier dispositif de validation (15) au premier appareil (11), l'information de validation du certificat étant déterminée (S5) dans le premier dispositif de validation (15) uniquement en cas de résultat de vérification négatif.

2. Procédé selon la revendication 1, dans lequel, en cas de résultat de vérification négatif, l'information de validation déterminée dans le premier dispositif de validation (15) est en outre transmise (S5) au dispositif de collecte de statut (30).

3. Procédé selon l'une quelconque des revendications précédentes, dans lequel l'information de validation est stockée sous la forme d'un bloc d'une chaîne de blocs dans un dispositif de stockage de chaîne de blocs (33).

4. Procédé selon la revendication 1 ou 2, dans lequel l'information de validation est stockée en tant qu'élément d'une base de données (32) dans le dispositif de collecte de statut (30).

5. Procédé selon l'une quelconque des revendications précédentes, dans lequel l'information de validation est envoyée au premier appareil (11) par le premier dispositif de validation (15) sans protection cryptographique.

6. Procédé selon l'une des revendications précédentes, dans lequel l'information de validation est transmise par le premier dispositif de validation (15) au dispositif de collecte de statut (30) en étant protégée de manière cryptographique, en particulier en étant signée numériquement, et est stockée dans le dispositif de collecte de statut (30).

7. Procédé selon la revendication 6, dans lequel l'information de validation protégée cryptographiquement par le premier dispositif de validation (15) est transmise à un deuxième dispositif de validation (25) en réponse à une requête provenant du dispositif de collecte de statut (30) et n'est envoyée au deuxième appareil (21) qu'après vérification réussie de la protection cryptographique dans le deuxième dispositif de validation (25).

8. Procédé selon la revendication 7, dans lequel le deuxième dispositif de validation (25) envoie l'information de validation au deuxième appareil (21) sans protection cryptographique.

9. Procédé selon la revendication 7, dans lequel le deuxième dispositif de validation (25) envoie l'information de validation au deuxième appareil (21) en étant protégée de manière cryptographique (15).

10. Procédé selon la revendication 6, dans lequel l'information de validation protégée cryptographiquement au moyen du premier dispositif de vérification (15) est vérifiée dans le dispositif de collecte de statut (30) et, en cas de résultat de vérification positif, la protection cryptographique au moyen du premier dispositif de vérification (15) est remplacée par une protection cryptographique au moyen du dispositif de collecte de statut (30) et est mémorisée dans le dispositif de collecte de statut (30).

11. Procédé selon l'une quelconque des revendications précédentes, dans lequel l'information de validation est transmise par le dispositif de collecte de statut (30) au dispositif de validation (15) uniquement lorsque l'information de validation est stockée dans le dispositif de collecte de statut (30) pendant une durée inférieure à une durée prédéterminée.

12. Procédé selon l'une quelconque des revendications précédentes, dans lequel les étapes du procédé sont exécutées au moyen de messages de protocole correspondant à un protocole de validation de certificat standardisé, en particulier un protocole de validation de certificat basé sur un serveur, SCVP.

13. Dispositif de validation pour valider un certificat numérique, dans lequel le dispositif de validation vérifie le certificat d'un partenaire de communication en lieu et place d'au moins un premier appareil (11, ..., 14), comprenant au moins un processeur qui est conçu de manière à :
- recevoir du premier appareil (11, ..., 14) une demande (S1) de validation du certificat du partenaire de communication,
- demander (S2) une information de validation au niveau d'un dispositif de collecte de statut (30),
- vérifier (S3) si une information de validation a été reçue par le dispositif de collecte de statut (30), et
- envoyer (S6) l'information de validation au premier appareil (11), et uniquement en cas de résultat de vérification négatif,
- déterminer (S4) l'information de validation du certificat lui-même, et
- transmettre (S5) l'information de validation déterminée au dispositif de collecte de statut (30).

14. Dispositif de collecte de statut comprenant au moins un processeur, celui-ci étant conçu de manière à:
- recevoir un message de demande d'une information de validation par un premier dispositif de validation (15),
- transmettre l'information de validation au premier dispositif de validation (15), et/ou recevoir et stocker l'information de validation provenant du premier dispositif de validation (15), et
- envoyer un message de réponse sans information de validation à une requête au premier dispositif de validation (15) si aucun résultat de validation n'est déterminé, et l'information de validation est déterminée localement dans le premier dispositif de validation (15) puisqu'aucune information de validation n'est contenue lorsque, dans le premier dispositif de validation (15), un message reçu est vérifié concernant l'information de validation.

15. Produit de programme informatique comprenant un support lisible par ordinateur non éphémère, pouvant directement être chargé dans une mémoire d'un ordinateur numérique, comprenant des portions de code de programme aptes à mettre en œuvre les étapes du procédé selon l'une quelconque des revendications 1 à 12.
